# EUROPEAN PATENT APPLICATION

(11) **EP 4 390 358 A1**
(43) Date of publication of application: **26.06.2024**
(21) Application number: 22929581.1
(22) Date of filing: 04.11.2022
(51) Int. Cl.: G01M 3/20

(54) **DETECTION DEVICE**

(30) Priority: 04.03.2022 CN 202220476220 U
(71) Applicant: Wuxi Lead Intelligent Equipment Co., Ltd., Wuxi, Jiangsu 214028 (CN)
(72) Inventor: WANG, Song, Wuxi, Jiangsu 214028 (CN); WU, Jianping, Wuxi, Jiangsu 214028 (CN); SUN, Yizhou, Wuxi, Jiangsu 214028 (CN)
(74) Representative: Rau, Schneck & Hübner Patentanwälte Rechtsanwälte PartGmbB
(86) International application number: PCT/CN2022/129974
(87) International publication number: WO 2023/165153

(57) **Abstract**

A detection device, including a mounting frame (11), a gas-charging mechanism (20) and a detection mechanism (30). The gas charging mechanism (20) and the detection mechanism (30) are both provided on the mounting frame (11). The gas charging mechanism (20) can charge a first gas into a welding seam of a workpiece. The detection mechanism (30) includes a detector (31) and a first detecting member. The detector (31) is configured to be in communication with the welding seam of the workpiece, and the first detecting member is in communication with the detector (31) and is configured to detect the first gas. With the detection device provided, after an aluminum nail of the battery is welded, the gas-charging mechanism (20) charges the first gas into the weld seam. Next, the workpiece is moved to the detection mechanism (30), so that the detector (31) is in communication with the weld seam. Then, the first detecting member is used to detect whether there is the first gas existing in the weld seam. If the first gas is detected, it is indicated that the sealing performance of the welding is unqualified, and if the first gas is not detected, it is indicated that the sealing performance of the welding is qualified. In this way, the detection device can detect the sealing performance of the welding, thereby guaranteeing the quality of the battery.

## Description

### TECHNICAL FIELD

The present application relates to the technical field of battery detection, and in particular to a detection device.

### BACKGROUND

Detection for battery sealing performance is required in a lithium battery production line. In the prior art, during a detection for sealing performance in a lithium battery welded with an aluminum nail, the battery needs helium gas injection in advance before welding, and is sealed with a rubber nail before being transferred. Next, welding is performed on the aluminum nail, and finally the battery is transferred for vacuum helium detection. When this method is used for detecting sealing performance of aluminum nail welding, if the rubber nail is sealed too tight, the helium gas injected into the battery housing may be unable to penetrate between the rubber nail and the aluminum nail, making it impossible to detect the sealing performance of aluminum nail welding.

### SUMMARY

For the above reasons, it is necessary to provide a detection device that can detect sealing performance of aluminum nail welding, in order to solve the problem that sealing performance of aluminum nail welding cannot be detected due to tight sealing of rubber nail in existing batteries.

A detection device, including:
A mounting frame;
A gas-charging mechanism provided on the mounting frame, can charge a first gas into a weld seam of a workpiece; and
A detection mechanism provided on the mounting frame, including a detector and a first detecting member, the detector being configured to be in communication with the weld seam of the workpiece, the first detecting member being in communication with the detector and is configured to detect the first gas.

With the above detection device provided, after the aluminum nail of the battery is welded, the gas-charging mechanism charges the first gas into the weld seam; then, the workpiece is moved to the detection mechanism, the detector is connected to the weld seam, and the first detecting member detects whether there is the first gas existing in the weld seam. If the first gas is detected, it is indicated that the sealing performance of the welding is unqualified; otherwise, if the first gas is not detected, it is indicated that the sealing performance of the welding is qualified. In this way, the detection device can detect the sealing performance of the welding, thereby guaranteeing the quality of the battery.

In one embodiment, the detection device further includes a base plate and a driving mechanism. The driving mechanism and the mounting frame are both provided on the base plate. The driving mechanism is configured to drive the workpiece to move in a first direction, so that the workpiece passes by a gas-charging position and a detection position;
When the workpiece is in the gas-charging position, the gas-charging mechanism may charge the first gas into the weld seam of the workpiece;
When the workpiece is in the detection position, the detector may be in communication with the weld seam of the workpiece.

In one embodiment, the detection device further includes a positioning mechanism, the driving mechanism being in transmission connection with the positioning mechanism to drive the positioning mechanism to move in the first direction, the positioning mechanism being configured to carry and position the workpiece.

In one embodiment, the positioning mechanism includes a carrier plate, a first positioning component and a second positioning component, the driving mechanism being in transmission connection with the carrier plate. The carrier plate is configured to carry the workpiece. The first positioning component and the second positioning component are both provided on the carrier plate. The first positioning component is configured to position the workpiece along a first direction, and the second positioning component is configured to position the workpiece along a second direction perpendicular to the first direction.

In one of the embodiments, the positioning mechanism further includes a second detecting member provided on the carrier plate, configured to detect surface defects of the workpiece which had been positioned by the first positioning component and the second positioning component.

In one embodiment, the first positioning component includes a first fixing block, a first positioning block and a first positioning driver. The first fixing block is fixedly connected to the carrier plate. The first positioning driver is provided on the carrier plate and is in transmission connection with the first positioning block. The first positioning driver is configured to drive the first positioning block to reciprocate in the first direction, so that the first positioning block moves towards and away from the first fixing block.

In one embodiment, the second positioning component includes a second fixing block, a second positioning block and a second positioning driver. The second fixing block is fixedly connected to the carrier plate. The second positioning driver is provided on the carrier plate and is in transmission connection with the second positioning block. The second positioning driver is configured to drive the second positioning block to reciprocate in the second direction, so that the second positioning block moves towards and away from the second fixing block.

In one embodiment, the positioning mechanism includes at least two groups of first positioning components and at least two groups of second positioning components, each group of first positioning components and a corresponding group of second positioning components are configured to position a workpiece.

In one embodiment, the gas-charging mechanism includes a gas-charging joint and a first gas-charging component. The gas-charging joint is provided on the mounting frame for communication with the weld seam of the workpiece. The first gas-charging component is in communication with the gas-charging joint for charging the first gas into the weld seam of the workpiece.

In one embodiment, the gas-charging mechanism further includes a second gas-charging component and a third detecting member. The second gas-charging component is in communication with the gas-charging joint and is configured to charge the second gas into the weld seam of the workpiece. The third detecting member is provided on the gas-charging joint or the second gas-charging component, and is configured to detect pressure in the gas-charging joint.

In one embodiment, the gas-charging mechanism further includes an exhaust valve, which is connected to the gas-charging joint and configured for communication between the gas-charging joint and the outside environment.

In one embodiment, the gas-charging mechanism further includes a gas-charging driving member provided on the mounting frame and is in transmission connection with the gas-charging joint to drive the gas-charging joint to reciprocate in a third direction. The gas-charging joint may abut against the workpiece during the reciprocating movement, so as to be in communication with the weld seam of the workpiece.

In one embodiment, the detection mechanism further includes a gas extractor connected between the detector and the first detecting member, configured to extract gas to the first detecting member.

In one embodiment, the detection mechanism further includes a detection driver provided on the mounting frame and is in transmission connection with the detector, to drive the detector to reciprocate in a third direction. The gas-charging joint may abut against the workpiece during the reciprocating movement, so as to be in communication with the weld seam of the workpiece.

### BRIEF DESCRIPTION OF THE DRAWINGS

In order to clearly explain embodiments of the present application or the technical solutions in the prior art, the drawings to be used in the embodiments or description of the prior art will be briefly introduced below. Obviously, the drawings referred to in the following description are no more than a few embodiments of the present application. For those of ordinary skill in the art, based on these drawings, other drawings can be obtained without creative efforts.
Fig. 1 is a schematic structural illustration of a detection device provided in an embodiment of the present application;
Fig. 2 is a right side view of a schematic structural illustration of the detection device shown in FIG. 1.

### DETAILED DESCRIPTION

In order to clarify and refine the above objects, features and advantages of the present application, the detailed description of the present application are illustrated in detail below with reference to the accompanying drawings. In the following description, numerous specific details are set forth in order to provide a thorough understanding of the present application. However, the present application may be implemented in many ways other than those described here, and those skilled in the art can make similar improvements without violating the connotation of the present application. Therefore, the present application is not limited to the specific embodiments disclosed below.

In the description of this application, it is to be understood that orientational or positional relationships denoted by the terms "central", "longitudinal", "transverse", "length" , "width", "thickness", "upper", "lower", "front", " "back", "left", "right", "vertical", "horizontal", "top", "bottom", "inside", "outside", "clockwise", "counterclockwise", "axial", "radial" and "circumferential", are based on the orientational or positional relationship shown in the drawings. These are only for the convenience of describing the present application and simplifying the description, rather than indicating or implying that the devices or elements referred to must be in a specific orientation, be constructed or operated in the specific orientation, and thus are not to be construed as limitations to the present application.

Further, terms "first" and "second" are used for descriptive purposes only and cannot be construed as indicating or implying relative importance, neither can they be construed as implicitly indicating the quantity of technical features they denote. Therefore, features defined as "first" and "second" may explicitly or implicitly include at least one of the features. In the description of this application, "plurality" means at least two, such as two, three, etc., unless otherwise expressly and specifically defined.

In this application, unless otherwise clearly stated and limited, the terms "mounting", "communication", "connection", "fixing" and other terms shall be understood in a broad sense. For example, it may be a fixed connection or a detachable connection, or integrated as a whole; it may be a mechanical connection or an electrical connection; it can be a direct connection or an indirect connection via an intermediate medium; it can be an internal connection between two elements or an interrelationship therebetween, unless otherwise specifically defined. For those of ordinary skill in the art, the specific meanings of the above terms in this application can be interpreted according to specific circumstances.

In this application, unless otherwise expressly stated and defined, a first feature "on" or "under" a second feature may mean that the first feature and the second feature are in direct contact, or in indirect contact via an intermediate medium. Furthermore, the first feature being "on", "above" and "over" the second feature may mean that the first feature is right above or diagonally above the second feature, or simply that the first feature is higher in horizontal height than the second feature. Similarly, the first feature being "under", "below" or "beneath" the second feature may mean that the first feature is right below or diagonally below the second feature, or simply that the first feature is lower in horizontal height than the second feature.

It is be noted that when an element is referred to as being "mounted" or "provided on" another element, it can be directly on the other element or there may be intervening element(s) between them. When an element is said to be "connected" to another element, it can be directly connected to the other element or there may also be intervening element(s) between them. The terms "vertical", "horizontal", "upper", "lower", "left", "right" and similar expressions used herein are for illustrative purposes only, rather than indicating the only implementation.

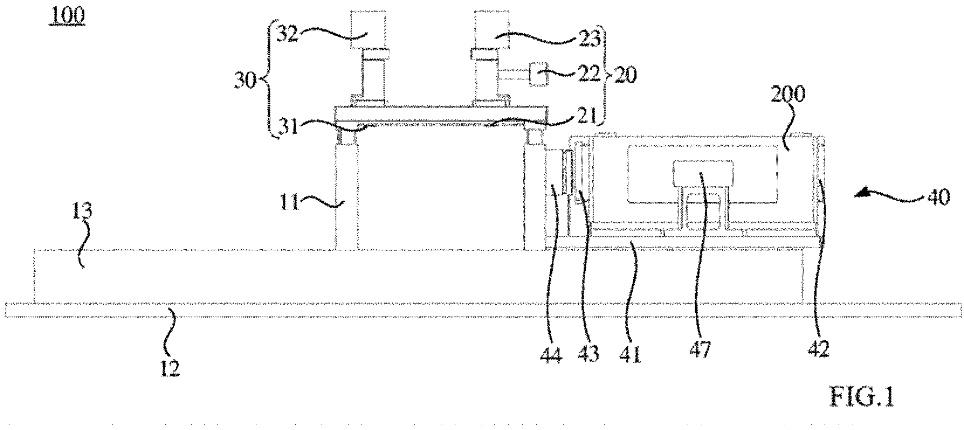

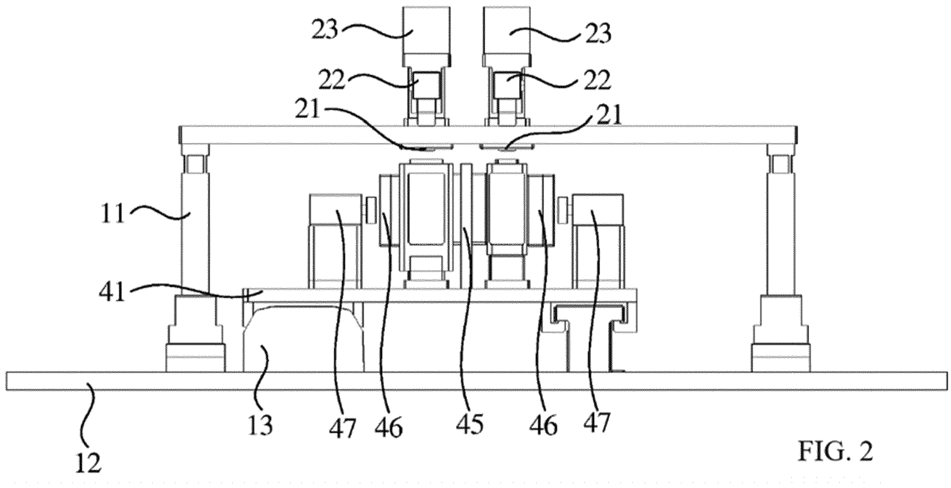

As shown in FIG. 1 and FIG. 2, a detection device 100 provided in an embodiment of the present application includes a mounting frame 11, a gas-charging mechanism 20 and a detection mechanism 30.

The gas-charging mechanism 20 and the detection mechanism 30 are both provided on the mounting frame 11. The gas-charging mechanism 20 can charge a first gas into a weld seam of a workpiece.

The detection mechanism 30 includes a detector 31 and a first detecting member. The detector 31 is configured for communication with the weld seam of the workpiece. The first detecting member is in communication with the detector 31 and is configured to detect the first gas.

In this embodiment, the workpiece is a battery, the first gas is helium, and the weld seam of the workpiece is the weld seam at the battery filling port, specifically the weld seam when welding the aluminum nail in the battery. Of course, in other embodiments, the workpiece can also be other products. Correspondingly, the first gas can also be another gas, as long as it does not negatively affect the product.

With the above-mentioned detection device provided, after an aluminum nail of the battery is welded, the gas-charging mechanism 20 charges the first gas into the weld seam. Next, the workpiece is moved to the detection mechanism 30, so that the detector 31 is in communication with the weld seam. Then, the first detecting member is used to detect whether there is the first gas existing in the weld seam. If the first gas is detected, it is indicated that the sealing performance of the welding is unqualified, and if the first gas is not detected, it is indicated that the sealing performance of the welding is qualified. In this way, the detection device can detect the sealing performance of the welding, thereby guaranteeing the quality of the battery.

It is to be explained that when the workpiece is a battery, in the case that the sealing performance of welding is qualified, after the gas-charging mechanism 20 charges the first gas into the weld seam, the first gas dissipates during movement of the workpiece to the detection mechanism 30, because the first gas cannot pass through the weld seam. As such, the first gas cannot be detected by the first detecting member. On the other hand, in the case that the sealing performance of welding is unqualified, the first gas can penetrate into the space between the aluminum nail and the rubber nail through the weld seam. In that case, the first gas cannot completely dissipate during movement of the workpiece to the detection mechanism 30, and can be detected by the first detecting member.

In some embodiments, the detection device also includes a base plate 12 and a driving mechanism 13. The mounting frame 11 and the driving mechanism 13 are both provided on the base plate 12. The driving mechanism 13 is configured to drive the workpiece to move in the first direction, so that the workpiece passes through the gas-charging position and the detection position.

When the workpiece is in the gas-charging position, the gas-charging mechanism 20 can charge the first gas into the weld seam of the workpiece. When the workpiece is in the detection position, the detector 31 can be in communication with the weld seam of the workpiece, so as to detect whether there is the first gas by the first detecting member.

The first direction is the left-right direction in Fig. 1, and is also the direction perpendicular to the paper surface in Fig. 2. To illustrate with reference to Fig. 1, the driving mechanism 13 drives the battery to move from right to left. The battery first moves to the gas-charging position. The gas-charging mechanism 20 charges the first gas into the weld seam of the battery filling port, and then the driving mechanism 13 continues to drive the battery to the left, until the battery is moved to the detection position. Then, the detector 31 is in communication with the weld seam at the battery filling port, and the first detecting member is configured to detect whether there is the first gas, thereby determining the sealing performance of the aluminum nail welding.

In practical applications, the driving mechanism 13 may be an electrical cylinder.

In some embodiments, the detection device further includes a positioning mechanism 40. The driving mechanism 13 is in transmission connection with the positioning mechanism 40, so as to drive the positioning mechanism 40 to move in the first direction. The positioning mechanism 40 is configured to carry and position the workpiece. That is to say, after the battery is carried and positioned by the positioning mechanism 40, the driving mechanism 13 drives the positioning mechanism 40 to move in the first direction, so that the battery passes through the gas-charging position and the detection position in sequence.

In some embodiments, the positioning mechanism 40 includes a carrier plate 41, a first positioning component and a second positioning component. The carrier plate 41 is provided on the base plate 12 in such a way as to be able to reciprocate along the first direction. The driving mechanism 13 is in transmission connection with the carrier plate 41. The carrier plate 41 is configured to carry the workpiece. The first positioning component and the second positioning component are both provided on the carrier plate 41. The first positioning component is configured to position the workpiece along the first direction, and the second positioning component is configured to position the workpiece along a second direction perpendicular to the first direction.

Here, the second direction is a direction perpendicular to the paper surface in FIG. 1 and the left-right direction in FIG. 2.

In some embodiments, the first positioning component includes a first fixing block 42, a first positioning block 43 and a first positioning driver 44. The first fixing block 42 is fixedly connected to the carrier plate 41. The first positioning driver 44 is provided on the carrier plate 41 and is in transmission connection with the first positioning block 43, so as to drive the first positioning block 43 to reciprocate in the first direction, that is, to move the first positioning block 43 towards and away from the first fixing block 42 .

In some embodiments, the second positioning component includes a second fixing block 45, a second positioning block 46 and a second positioning driver 47. The second fixing block 45 is fixedly connected to the carrier plate 41. The second positioning driver 47 is provided on the carrier plate 41 and is in transmission connection with the second positioning block 46, so as to drive the second positioning block 46 to reciprocate in the second direction, that is, to move the second positioning block 46 towards and away from the second fixing block 45.

It is to be noted that in this embodiment, the battery is provided longitudinally along the first direction. When the first positioning block 43 is approaching the first fixing block 42, the first positioning block 43 and the first fixing block 42 can respectively abut against opposite ends of the battery along the first direction. When the second positioning block 46 approaches the second fixing block 45, the second positioning block 46 and the second fixing block 45 can respectively abut against opposite sides of the battery along the second direction. Accordingly, the battery is positioned in both the first direction and the second direction.

In some embodiments, the positioning mechanism 40 includes at least two groups of first positioning components and at least two groups of second positioning components. Each group of first positioning components and a corresponding group of second positioning components are configured to position a workpiece, so that at least two workpieces are positioned on the carrier plate 41.

One thing for sure is, if at least two workpieces are carried on the carrier plate 41, the gas-charging mechanism 20 can synchronously charge gas into weld seams of the at least two workpieces, while the detection mechanism 30 includes at least two detectors 31 to respectively detect the at least two workpieces, thereby improving detection efficiency.

In addition, as shown in Fig. 2, two batteries are positioned in Fig. 2, which are spaced apart along the second direction; while two groups of second positioning components share a second fixing block 45. Therefore, given certain conditions, two adjacent groups of first positioning components may share a first fixing block 42, and two adjacent groups of second positioning components may share a second fixing block 45.

In some embodiments, both the first positioning driver 44 and the second positioning driver 47 are gas cylinders.

In some embodiments, the positioning mechanism 40 further includes a second detecting member provided on the carrier plate 41, which is configured to detect surface defects of the workpiece positioned through the first positioning component and the second positioning component.

In this embodiment, the workpiece is a battery, and the second detecting member is configured to detect whether the battery is bulging and whether the battery is damaged. If there is a bulging or damage, the battery can be immediately determined to be unqualified.

In practical applications, the second detecting member may be a displacement sensor.

In some embodiments, the gas-charging mechanism 20 includes a gas-charging joint 21 and a first gas-charging component. The gas-charging joint 21 is provided on the mounting frame 11 and is configured to be in communication with the weld seam of the workpiece The first gas-charging component is in communication with the gas-charging joint 21 and is configured for charging the first gas into the weld seam of the workpiece.

It can be seen that when the workpiece moves to the gas-charging position, the gas-charging joint 21 can be in communication with the weld seam of the workpiece, and then the first gas is charged into the weld seam of the workpiece by the first gas-charging component.

One thing for sure is, when the workpiece is a battery, both the gas-charging joint 21 and the detector 31 can completely cover the liquid filling port of the battery; in addition, there are sealing loops provided inside the gas-charging joint 21 and the detector 31 to ensure sealed contact with the battery, thereby guaranteeing detection accuracy.

Further, the gas-charging mechanism 20 also includes a second gas-charging component and a third detecting member 22. The second gas-charging component is in communication with the gas-charging joint 21 and is configured to charge the second gas into the weld seam of the workpiece. The third detecting member 22 is provided on the gas-charging joint 21 or the second gas-charging component, and is configured to detect the pressure within the gas-charging joint 21.

It is to be noted that when the workpiece moves to the gas-charging position, the gas-charging joint 21 is in connection with the weld seam of the workpiece. Firstly, the second gas is charged into the weld seam through the second gas-charging component until the pressure in the gas-charging joint 21 reaches a predetermined pressure. Then, the third detecting member 22 detects the pressure in the gas-charging joint 21. If the pressure cannot be maintained or cannot reach the predetermined pressure within a predetermined time, it is indicated that the sealing performance of the welding is unqualified. Otherwise, if the predetermined pressure can be reached and maintained within the predetermined time, it is indicated that there is no obvious leakage.

After the second gas-charging component and the third detecting member 22 passes the detection, pressurized gas is discharged, and then the first gas is charged into the weld seam of the workpiece through the first gas-charging component. Next, the workpiece is moved to the detection position where the first gas is detected through the detection mechanism 30.

Let a "first detection" be the detection of the welding sealing performance under cooperation of the second gas-charging component and the third detecting member 22, and let a "second detection" be the detection of the welding sealing performance under cooperation of the first gas-charging component and the detection mechanism 30. It can be understood that the second detection is greater in accuracy than the first detection, however, the second detection costs more than the first detection. As such, the first detection may be used to "knockout" workpieces with obviously unqualified welding sealing performance in advance, thereby eliminating the need for the second detection and reducing the cost.

In addition, in this embodiment, the second gas is a compressed gas, and the third detecting member 22 is a pressure detecting member. Since the second gas-charging component is in communication with the gas-charging joint 21, the pressure may also be detected when the pressure detecting member is provided on the second gas-charging component.

In some embodiments, the gas-charging mechanism 20 further includes a gas-charging driving member 23. The gas-charging driving member 23 is provided on the mounting frame 11 and is in transmission connection with the gas-charging joint 21 to drive the gas-charging joint 21 to reciprocate in a third direction perpendicular to the first direction. During its movement, the gas-charging joint 21 can abut against the workpiece in the gas-charging position, so as to be in communication with the weld seam of the workpiece.

The third direction is the up-down direction in Fig. 1 and Fig. 2. When the workpiece moves to the gas-charging position, the gas-charging driving member 23 drives the gas-charging joint 21 to descend until the gas-charging joint 21 contacts the workpiece and is connected to the weld seam of the workpiece.

In practical applications, the gas-charging driving member 23 may be a gas cylinder.

In some embodiments, the gas-charging mechanism 20 further includes an exhaust valve, which is in communication with the gas-charging joint 21 and is configured for communication between the gas-charging joint 21 and the outside environment, so as to discharge high-pressure gas in the gas-charging joint 21.

In some embodiments, the detection mechanism 30 further includes a gas extractor. The gas extractor is connected between the detector 31 and the first detecting member, and is configured to extract gas to the first detecting member, so that the first detecting member may detect whether there is the first gas.

In practical applications, the gas extractor may be a vacuum pump, and the first detecting member may be a helium detection equipment.

In some embodiments, the detection mechanism 30 further includes a detection driving member 32 provided on the mounting frame 11 and is in transmission connection with the detector 31 to drive the detector 31 to reciprocate in the third direction. The detector 31 may abut against the workpiece in the detection position during the reciprocating movement, so as to be in communication with the weld seam of the workpiece.

When the workpiece moves to the detection position, it is located below the detector 31. The detection driving member 32 drives the detector 31 to descend until it abuts against the workpiece. The detector 31 is in communication with the weld seam of the workpiece. Then, the gas extractor extracts the gas to the first detecting member, and the first detecting member detects whether there is the first gas existing.

In practical applications, the detection driving component 32 may be a gas cylinder.

In order to facilitate understanding of the technical solution of the present application, take a battery as an example, to describe in conjunction with Fig. 1 the detection process of the detection device in the above embodiment.

The battery is placed on the carrier plate 41, and is positioned by the first positioning component and the second positioning component. After positioning, the second detecting member is configured to detect whether there are bulges or damage on the surface of the battery. After passing the detection, the driving mechanism 13 drives the carrier plate 41 to move to the left.

After the battery moves to the gas-charging position along with the carrier plate 41, the gas-charging driving member 23 drives the gas-charging joint 21 to descend and abut against the liquid filling port of the battery. Then, the second gas-charging component charges compressed gas into the weld seam at the battery filling port through the gas-charging joint 21, cooperates with the third detecting member 22 to detect whether the pressure in the gas-charging joint 21 reaches a predetermined pressure, and detects whether the pressure can be maintained at the predetermined pressure.

After detecting that the pressure can reach and maintain the predetermined pressure, the exhaust valve opens to discharge the high-pressure gas. After exhaustion, the exhaust valve is closed, the first gas-charging component charges helium gas into the weld seam at high pressure, and then the pressure is maintained for a period of time. Then, the gas-charging driving member 23 drives the gas-charging joint 21 to ascend, and the driving mechanism 13 drives the carrier plate 41 to move to the left.

After the battery moves to the detection position along with the carrier plate 41, the detection driving member 32 drives the detector 31 to descend and abut against the liquid filling port of the battery. Then, the gas extractor extracts the gas to the first detecting member, and the first detecting member detects whether there is helium existing in the gas.

It is to be explained that there is a small distance between the gas-charging position and the detection position. If the welding of the aluminum nail in the battery is qualified, there would be no helium detected by the first detecting member. By contrast, if the welding of the aluminum nail in the battery is unqualified, the helium gas would enter the gaps between the aluminum nail and the rubber nail during high-pressure charging of the helium gas. As such, the helium cannot dissipate during the movement of the battery from the gas-charging position to the detection position, and will be detected by the first detecting member.

The technical features of the above-described embodiments can be combined in any manner. For the sake of brevity of description, not all possible combinations of the individual technical features of the above-described embodiments have been described. However, as long as there is no contradiction between the combinations of these technical features, they should be considered to be within the scope of the present specification.

The above-described embodiments are merely illustrations of a few implementations of the present application described in a specific and detailed manner, and are not to be construed as limitation to the scope of the patent. It should be noted that for a person of ordinary skill in the art, variations and improvements could be made without departing from the principle of the present application, and these fall within the protection scope of the present application. Therefore, the scope of protection of the present application shall be defined by the appended claims.

## Claims

1. A detection device, **characterized by** comprising:
a mounting frame;
a gas-charging mechanism provided on the mounting frame, can charge a first gas into a weld seam of a workpiece; and
a detection mechanism provided on the mounting frame, comprising a detector and a first detecting member, the detector being configured to be in communication with the weld seam of the workpiece, the first detecting member being in communication with the detector and is configured to detect the first gas.

2. The detection device of claim 1, **characterized by** further comprising a base plate and a driving mechanism;
the driving mechanism and the mounting frame are both provided on the base plate;
the driving mechanism is configured to drive the workpiece to move in a first direction, so that the workpiece passes by a gas-charging position and a detection position;
when the workpiece is in the gas-charging position, the gas-charging mechanism can charge the first gas into the weld seam of the workpiece; and
when the workpiece is in the detection position, the detector can be in communication with the weld seam of the workpiece.

3. The detection device of claim 2, **characterized by** further comprising a positioning mechanism, the driving mechanism being in transmission connection with the positioning mechanism to drive the positioning mechanism to move in the first direction, the positioning mechanism being configured to carry and position the workpiece.

4. The detection device of claim 3, **characterized in that**
the positioning mechanism comprises a carrier plate, a first positioning component and a second positioning component;
the driving mechanism is in transmission connection with the carrier plate;
the carrier plate is configured to carry the workpiece;
the first positioning component and the second positioning component are both provided on the carrier plate;
the first positioning component is configured to position the workpiece along a first direction; and
the second positioning component is configured to position the workpiece along a second direction perpendicular to the first direction.

5. The detection device of claim 4, **characterized in that**
the positioning mechanism further comprises a second detecting member provided on the carrier plate, configured to detect surface defects of the workpiece which had been positioned by the first positioning component and the second positioning component.

6. The detection device of claim 4, **characterized in that**
the first positioning component comprises a first fixing block, a first positioning block and a first positioning driver;
the first fixing block is fixedly connected to the carrier plate;
the first positioning driver is provided on the carrier plate and is in transmission connection with the first positioning block;
the first positioning driver is configured to drive the first positioning block to reciprocate in the first direction, so that the first positioning block moves towards and away from the first fixing block.

7. The detection device of claim 4, **characterized in that**
the second positioning component comprises a second fixing block, a second positioning block and a second positioning driver;
the second fixing block is fixedly connected to the carrier plate;
the second positioning driver is provided on the carrier plate and is in transmission connection with the second positioning block;
the second positioning driver is configured to drive the second positioning block to reciprocate in the second direction, so that the second positioning block moves towards and away from the second fixing block.

8. The detection device of claim 4, **characterized in that**
the positioning mechanism comprises at least two groups of first positioning components and at least two groups of second positioning components, each group of first positioning components and a corresponding group of second positioning components are configured to position a workpiece.

9. The detection device of any one of claims 1-8, **characterized in that**
the gas-charging mechanism comprises a gas-charging joint and a first gas-charging component;
the gas-charging joint is provided on the mounting frame for communication with the weld seam of the workpiece; and
the first gas-charging component is in communication with the gas-charging joint for charging the first gas into the weld seam of the workpiece.

10. The detection device of claim 9, **characterized in that**
the gas-charging mechanism further comprises a second gas-charging component and a third detecting member;
the second gas-charging component is in communication with the gas-charging joint and is configured to charge the second gas into the weld seam of the workpiece; and
the third detecting member is provided on the gas-charging joint or the second gas-charging component, and is configured to detect pressure in the gas-charging joint.

11. The detection device of claim 10, **characterized in that**
the gas-charging mechanism further comprises an exhaust valve, which is connected to the gas-charging joint and configured for communication between the gas-charging joint and the outside environment.

12. The detection device of claim 9, **characterized in that**
the gas-charging mechanism further comprises a gas-charging driving member provided on the mounting frame and is in transmission connection with the gas-charging joint to drive the gas-charging joint to reciprocate in a third direction; and
the gas-charging joint can abut against the workpiece during the reciprocating movement, so as to be in communication with the weld seam of the workpiece.

13. The detection device of any one of claims 1-8, **characterized in that**
the detection mechanism further comprises a gas extractor connected between the detector and the first detecting member, configured to extract gas to the first detecting member.

14. The detection device of any one of claims 1-8, **characterized in that**
the detection mechanism further comprises a detection driver provided on the mounting frame and is in transmission connection with the detector, to drive the detector to reciprocate in a third direction; and
the gas-charging joint can abut against the workpiece during the reciprocating movement, so as to be in communication with the weld seam of the workpiece.
